# EUROPEAN PATENT SPECIFICATION

(11) **EP 3 738 078 B1**
(45) Date of publication and mention of the grant of the patent: **05.10.2022**
(21) Application number: 18745846.8
(22) Date of filing: 12.07.2018
(51) Int. Cl.: G06K 19/077

(54) **METHOD FOR MANUFACTURING A SIM CARD AND SIM CARD**
VERFAHREN ZUR HERSTELLUNG EINER SIM-KARTE SOWIE SIM-KARTE
PROCÉDÉ DE FABRICATION D'UNE CARTE SIM ET CARTE SIM

(30) Priority: 12.01.2018 WO PCT/IB2018/000086
(43) Date of publication of application: 18.11.2020
(73) Proprietor: Linxens Holding, 78200 Mantes-la-Jolie (FR)
(72) Inventor: YEAP, Yean Wei, Singapore 797530 (SG)
(74) Representative: INNOV-GROUP
(86) International application number: PCT/EP2018/069052
(87) International publication number: WO 2019/137638

(56) References cited:
- EP-A1- 2 746 998
- US-A1- 2014 290 051

## Description

### Field of the invention

The invention relates to a method for manufacturing a SIM card (i.e. a Subscriber Identity Module card) and a SIM card obtained from such method.

### Background of the invention

SIM cards are used in particular in mobile and/or wireless communication devices (e.g. mobile phones, tablet computers, etc.). SIM cards comprise a chip wherein information is recorded. In particular, this information relates to the identity of a subscriber to a GSM network (Global System for Mobile communications).

US2014/290051 A1 is reflected in the preamble of independent claims.

There is a general trend for miniaturizing SIM cards. Thus, various form factors have been standardized, from full size SIM cards (IFF) to Mini SIM cards (2FF), Macro SIM cards (3FF) and Nano SIM cards (4FF), and there is a need for producing even smaller SIM cards.

Methods for manufacturing SIM card of the prior art comprise in particular, making a module and integrating this module in a card body. For example, making the module comprises the steps of
- providing a tape of dielectric material having a first and second main surfaces and a conductive layer laminated onto the first main surface, with conductive contacts formed in the conductive layer, the conductive contacts being arranged so as to form at least one pad of contacts corresponding to one SIM card delimited by a peripheral boundary;
- providing a chip and electrically connecting the chip to at least some contacts of the at least one pad of contacts; and
- providing an encapsulation material on the second main surface, over the chip.

Then the module is, for examples, either inserted in a cavity made in a card body of plastic material, or overmolded with a plastic material so as to form the card body.

However, the smaller the module is, the lesser surface is left for adhering the module to the card body. Particularly, when the module has to be inserted in a cavity, the adhesion between the module and the card body becomes insufficient due to the limited area left for a hotmelt adhesion. Then it is difficult, or even not possible, to achieve strengths greater or equal to 90N when conducting back-of-card spot pressure tests, as set by the current specification in card manufacturing industry.

The invention aims, in particular, at addressing the challenges in packaging cards having a small form factor and more particularly having a form factor smaller than 4FF.

### Summary of the invention

Thus, according to the invention, it is provided a method according to claim 1.

In other words, with the manufacturing method according to the invention, inserting the module in a card body is replaced by an encapsulation covering the most part of the area corresponding to the second surface (back face) of the SIM card (i.e. the area delimited by the peripheral boundary of the SIM card). Consequently, a SIM card packaging, in particular for SIM cards having a form factor smaller than 4FF, can be achieved through the direct dispensing of encapsulation material onto the dielectric tape, to form the card.

The area covered by the encapsulation material is essentially limited by the bordering line extending along the delimiting structures. Since this bordering line is in the vicinity of the peripheral boundary of the SIM card, all or almost all the second surface of the SIM card is covered by the encapsulation material. The encapsulation material forms the card body. The module does no longer need to be inserted or overmolded in a card body of plastic material. One can also say that the module (comprising the dielectric substrate, electrical contacts, a chip connected to the electrical contacts and the encapsulation material protecting the chip) forms a SIM card.

One aspect of the invention relates to the delimiting structures which avoid the encapsulation material to spread over an area larger than the one delimited by the peripheral boundary of the SIM card. The advantages of this spread limitation are in particular, that the spread limitation reduces the quantity of encapsulation material, it helps shaping the card body and there is a smaller thickness of materials to be cut when separating the SIM card from each other.

These delimiting structures are advantageously formed in the dielectric substrate. For example, the delimiting structures are advantageously slots or openings punched in the dielectric substrate when punching the holes through which the connections between the chip and the contacts are made. The delimiting structures may also be embossments made in the dielectric substrate by stamping. The delimiting structures may be of any shape: dot, comma, oblong, square, triangle, etc. Advantageously, the delimiting structures are located along a bordering line which is as close as possible to the peripheral boundary. This bordering line may be a continuous line or a dotted line with delimiting structures spaced apart from one another along this bordering line. The delimiting structures, formed by slots or openings punched in the dielectric substrate, may be located in regions of the dielectric substrate covered by the conductive layer laminated on its first main face. In other words, the slots or openings form blind holes through the thickness of the dielectric substrate closed by the conductive layer. Alternatively, the delimiting structures, formed by slots or openings punched in the dielectric substrate, are also punched through the conductive layer laminated on its first main face. In other words, the slots or openings form through holes through the overall thickness of both the dielectric substrate and the conductive layer. Advantageously, the delimiting structures formed by slots or openings punched in the dielectric substrate are spaced apart by a distance comprised for example between 0.3 and 0.6mm.

According to another aspect, a SIM card according to claim 10 is provided.

Further this SIM card comprises delimiting structures made at least in the dielectric material, in the vicinity of the peripheral boundary. The delimiting structures are arranged along a bordering line, and the encapsulation material is placed over an area of the second main surface located essentially inside the bordering line.

### Brief description of the drawings

- Figure 1 is a schematic flow chart of an example of implementation of a method, according to the invention, for manufacturing SIM cards;
- Figure 2 schematically shows the design of the contact face (i.e. front face) of an exemplary embodiment of a SIM card manufactured according to the invention;
- Figure 3 schematically shows the design of the bonding face (i.e. back face) of an exemplary embodiment of a SIM card manufactured according to the invention;
- Figure 4 schematically shows the superimposition of the designs of both the contact and bonding faces of an exemplary embodiment of a SIM card manufactured according to the invention;
- Figure 5 schematically shows the superimposition of the figure 3 together with the encapsulation material of an exemplary embodiment of a SIM card manufactured according to the invention;
- Figure 6 schematically shows a cross-section of an exemplary embodiment of a SIM card manufactured according to the invention;
- Figures 7 and 8, schematically and respectively show the first and second faces of a tape with four SIM cards manufactured according to the invention;
- Figures 9 and 10, schematically and respectively show the contact face (front face) and a perspective view of the bonding face (back face) of another exemplary embodiment; and
- Figures 11 and 12, schematically and respectively show the contact face (front face) and a perspective view of the bonding face (back face) of another exemplary embodiment of a SIM card manufactured according to the invention.

### Detailed description of an exemplary embodiment

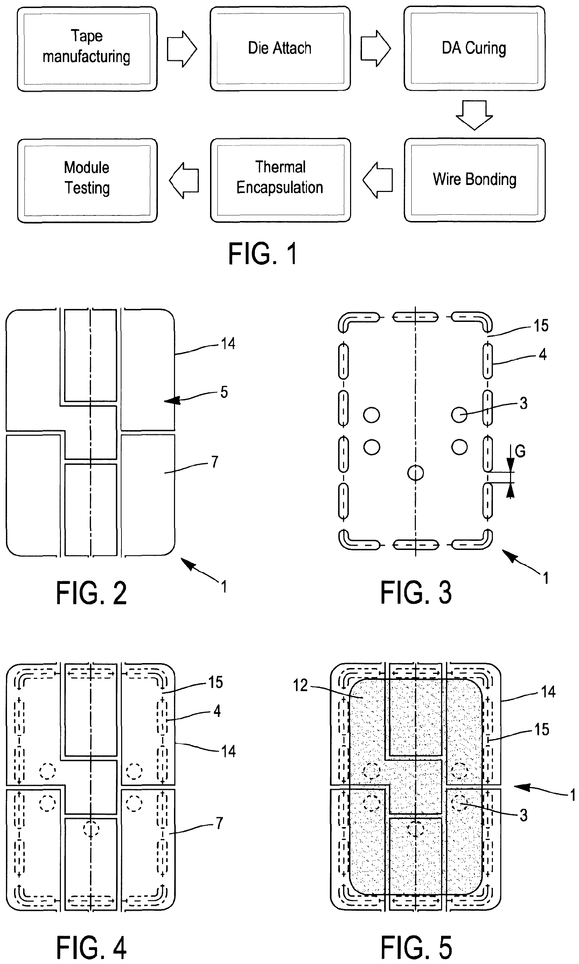

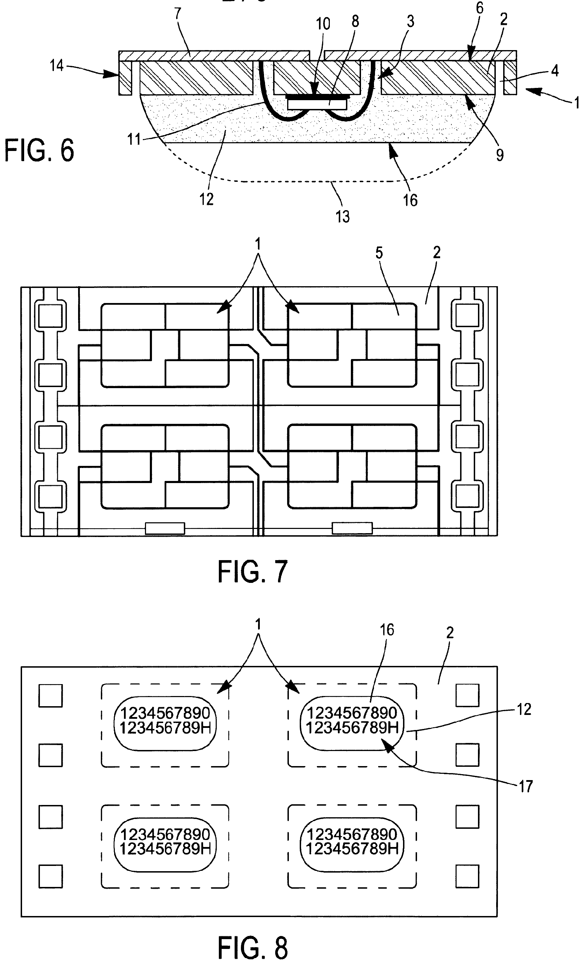

As shown on figure 1, an example of method, according to the invention, for manufacturing a SIM card 1 may comprise the following steps:
- Tape manufacturing: this step may be achieved with processes which are well known by the one skilled in the art. The tape 2 may comprise a dielectric substrate (for example an epoxy glass substrate with a thickness comprised between 50 and 130 µm. This dielectric substrate may be punched for making bonding holes 3 and delimiting structures 4. Advantageously, the bonding holes 3 and delimiting structures 4 are punched at the same time. The punching is advantageously performed prior to laminating an electrically conductive layer 5 onto its first main face 6 (contact face) of the dielectric substrate. The electrically conductive layer 5 may be made of copper, aluminum, stainless steel, etc. or one of the alloy of these conductive materials. The electrically conductive layer 5 may have a thickness comprised between 18 and 38 µm. The electrically conductive layer 5 may be a solid (full) sheet when laminated onto the first main face 6 of the dielectric material. Then, contacts 7 are made after the lamination of this solid sheet onto the first main face 6 of the dielectric substrate. In this case, the contacts 7 may be formed by photolithography and etching. Alternatively, the contacts 7 are formed according to the lead-frame technology. In other words, they are cut by punching a solid conductive sheet prior to the lamination of the contacts 7 onto the first main face 6 of the dielectric substrate. With both technologies (photolithography and etching or lead-frame) the conductive sheet may be adhered to the first main face 6 of the dielectric substrate by lamination under pressure and temperature, or with an intermediate adhesive layer (not shown). When an adhesive layer is used, its thickness may be comprised between 15 and 25 µm and it is spread over the first main face prior to punching bonding holes 3 so as to keep the bottom of the bonding holes 3 free from adhesive material and to ensure a reliable connection of the contacts 7 with the chip 8.
- Die attach: A chip 8 (integrated circuit) is glued on the second main face 9 of the dielectric substrate with a resin 10 according to processes which are well known by the one skilled in the art.
- Die attach curing: The resin 10 used for gluing the chip 8 on the second main face 9 of the dielectric substrate is cured according to processes which are well known by the one skilled in the art.
- Wire bonding: The chip 8 is connected to contacts 7 with wires 11 extending through bonding holes 3, between connecting pads of the chip 8 and the conductive area of the contacts 7, located at the bottom of the bonding holes 3. This step may be performed by ultrasonic or thermocompression according to processes which are well known by the one skilled in the art. Alternatively, the chip 8 is connected to the contacts with a flip-chip technology.
- Thermal encapsulation: the chip 8 and its connecting wires 11 to the contacts 8 are protected by an encapsulation material 12. Advantageously, the encapsulation material 12 is a thermal resin, for example supplied by Threebond^{®} or Henkel Hysol^{®}. Its viscosity is for example comprised between 10,000 and 50,000 mPa.s and its curing temperature is for example between 100 and 150°C (for a duration of one hour to a few hours). For example, the thermal resin has a black or dark color. An identification code (i.e. Integrated Circuit Card Identifier or ICCID number) will be engraved in the encapsulation material 12 at a later stage. Because of the relatively high viscosity of the encapsulation material 12, it stops at the limiting structures 4 when dispensed over the second main face 9 of the dielectric substrate. The encapsulation material 12 forms a dome or round globe top 13 over the chip 8 and the wires 11 (see the dotted line on figure 6) with a thickness not exceeding 1100µm (including the thickness of the dielectric tape 2). Then the encapsulation material 12 is flattened. The flattening can be performed by abrasion of the encapsulation material 12. Alternatively, the flattening can be performed by pressure onto the globe top 13 while the encapsulation material 12 is still hot and malleable. According to various embodiments, the encapsulation material 12 may stop before, in, or just after the limiting structures 4 when dispensed over the second main face 9 of the dielectric substrate. According to other various embodiments, the encapsulation material 12 which had stopped before, in, or just after the limiting structures 4 when dispensed over the second main face 9 of the dielectric substrate, may be pushed along, in or just after the limiting structures 4, when the flattening is performed by pressure onto the globe top 13 while the encapsulation material 12 is still hot and malleable.
- Module or card testing: the connection between the chip 8 and the contacts 7 and/or the chip functioning can be easily tested while the SIM cards 1 are still on the tape 2. Alternatively, this testing is performed after separating the SIM cards 1 from each other.

As can be seen on figure 2, the SIM card 1 has a pad of six contacts 7 delimited by a peripheral boundary 14. The peripheral boundary 14 corresponds to the external outline of the contacts 7. On this example, there are six contacts 7 or pins on the SIM card 1, but another number of contacts 7 or pins may be envisioned.

As can be seen on figure 3, the SIM card 1 has five bonding holes 3 and fourteen slots forming delimiting structures 4, extending along a bordering line 15, but other numbers of bonding holes 3 and slots 4 may be envisioned. The bordering line 15 as a substantially rectangular shape. The slots 4 extend essentially along the sides of this rectangle. For example, the slots 4 are 100 to 300µm µm wide and 1 to 2 mm long. For example, the slots 4 are space apart along the bordering line 15 with a gap G 300 to 600 µm long.

As can be seen on figure 4, the bordering line 15 is located in the vicinity of the peripheral boundary 14. For example, the slots 4 are at a distance from the peripheral boundary 14 comprised in the following range: 0.3mm to 1.5mm. The slots 4 made through the dielectric substrate are covered by the contacts 7 so as to keep a more robust structure.

As can be seen on figure 5, the encapsulation material 12 dispensed on the second main face 9, over the chip 8 (not shown on Fig. 5) and its connection wires 11 (not shown on Fig. 5) to the contacts 7, is essentially limited by the bordering line 15 extending along the delimiting structures 4. In other words, the encapsulation material 12 is dispensed over an area of the second main face 9 located essentially inside the bordering line 15.

As can be seen on figures 7 and 8, there are two units or SIM cards 1 across a tape of 35mm width (parallel to the largest side of the rectangular shape of the SIM cards 1). But, as their surface is smaller than 4FF, it may be possible to produce three or more units or SIM cards 1 across a tape of 35mm width or even more across a tape of 70mm width.

As can be seen on figure 8, the flat surface 16 created on the encapsulation material 12 may be used for marking an ICCID 17. For example, the ICCID 17 is marked with laser engraving.

With this respect, a black or dark encapsulation material 12 is preferred, even though UV encapsulation material 12 (translucent) may be used.

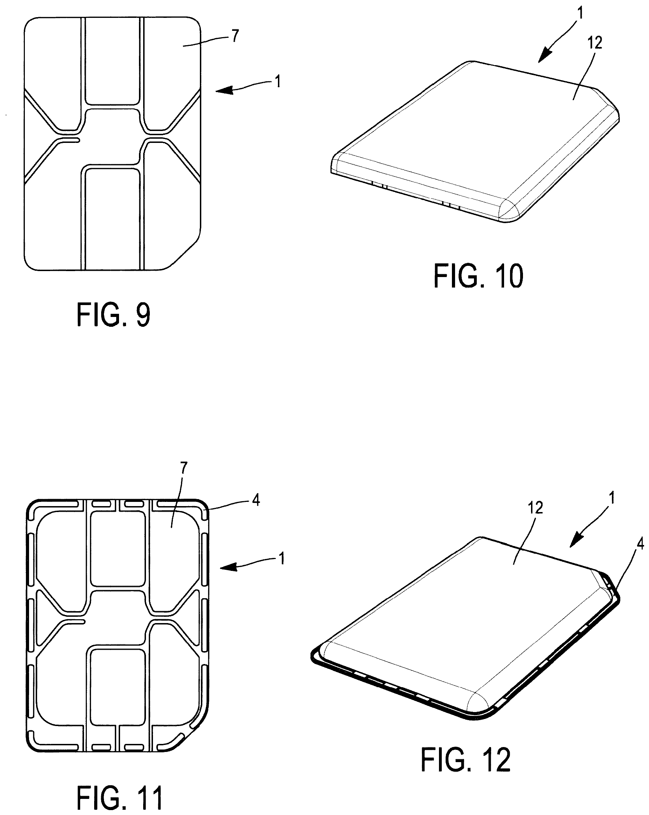

Another embodiment is shown on figures 9 and 10 of a SIM card manufactured according to the invention. According to this embodiment, the design of the contacts 7 is different from the one shown on figures 2, 3 and 5. But, this is not the only difference. The encapsulation material 12 has been dispensed over the tape 2, on the back face, so as to extend over and beyond the limiting structures 4, either directly when dispensed, or when flattening the globe top 13 while the encapsulation material 12 is still hot and malleable. Then, the limiting structures 4 are no longer visible, neither on the contact face nor on the bonding face of the finished SIM card.

Another embodiment is shown on figures 11 and 12 of a SIM card manufactured according to the invention. According to this embodiment, the limiting structures are made as through-holes opened and visible on the contact face. The encapsulation material 12 has been dispensed over the tape 2, on the back face, so as not to extend over or beyond the limiting structures 4. Alternatively, according to another embodiment, which is not shown, of a SIM card manufactured according to the invention, the limiting structures 4 are made as through-holes (i.e. the tape 2 and the conductive layer 5), but the encapsulation material 12 has been dispensed over the tape 2, on the back face, so as to extend over or beyond the limiting structures 4. Then, the limiting structures 4 are filled with the encapsulation material 12.

The manufacturing method according to the invention may be performed with process steps according to the state of art of smartcard manufacturing, without the need of further investments in equipment such as for example molding tools. Since there is no hotmelt lamination of a module in a cavity or any other kind of card embedding processes, the overall manufacturing method is simpler. The number of process steps is reduced compare to existing processes.

The thermal encapsulation forms part of the card body. As such, there is no risk of lack of adhesion between a module and a card body.

## Claims

1. Method for manufacturing a Subscriber Identity Module (SIM) card (1), the method comprising the steps of
- providing a tape of dielectric material (2) having a first (6) and a second (9) main surfaces and a conductive layer (5) laminated onto the first main surface (6), with conductive contacts (7) formed in the conductive layer (5), the conductive contacts (7) being arranged so as to form at least one pad of contacts (7) corresponding to one SIM card (1) delimited by a peripheral boundary (14);
- providing a chip (8) and electrically connecting the chip (8) to at least some contacts (7) of the at least one pad of contacts (7);
- providing an encapsulation material (12) on the second main surface (9), over the chip (8);
**characterized in that** the method comprises the steps of:
- forming delimiting structures (4) in the dielectric material (2) in the vicinity and inside of the peripheral boundary (14), the delimiting structures (4) comprising openings or embossments being arranged along a bordering line (15); and
- dispensing the encapsulation material (12) over an area of the second main surface (9) located essentially inside the bordering line (15) along which are arranged the delimiting structures.

2. Method according to claim 1, wherein forming delimiting structures (4) in the dielectric material (2) comprises punching holes or slots along the bordering line (15).

3. Method according to any one of the preceding claims, wherein a flat surface (16) is formed on the top of the encapsulation material (12).

4. Method according to claim 3, wherein the flat surface (16) is formed by abrading the encapsulation material (12).

5. Method according to claim 3 or 4, wherein a mark (17) is engraved on the flat surface (16).

6. Method according to any one of the preceding claims, wherein dispensing the encapsulation material (12) is performed by thermal encapsulation.

7. Method according to claim 6, wherein the encapsulation material (12) is a resin having a viscosity comprised between 10,000 and 50,000 mPa.s.

8. Method according to any one of the preceding claims, wherein the encapsulation material (12) is dispensed so as to extend over the delimiting structure (4) in the finished SIM card.

9. Method according to any one of the preceding claims, wherein the delimiting structures (4) are made as through-holes in both the tape of dielectric material (2) and the conductive layer (5).

10. SIM card (1) delimited by a peripheral boundary (14) and comprising:
- a substrate of dielectric material (2) having a first (6) and second (9) main surfaces,
- a conductive layer (5) laminated onto the first main surface (6), with conductive contacts (7) formed in the conductive layer (5), the conductive contacts (7) being arranged so as to form a pad of contacts (7),
- a chip (8) electrically connected to at least some contacts (7) of the pad of contacts (7);
- an encapsulation material (12) on the second main surface (9), over the chip (8);
**characterized in that** it comprises delimiting structures (4) in the dielectric material in the vicinity and inside of the peripheral boundary (14), the delimiting structures (4) being arranged along a bordering line (15) and comprising openings or embossments, and the encapsulation material (12) being placed over an area of the second main surface (9) located essentially inside the bordering line (15) along which are arranged the delimiting structures (4).

11. SIM card according to claim 10, having a peripheral boundary (14) essentially corresponding to the external boundary of the pad of contacts (7).

12. SIM card according to claim 10 or 11, wherein the peripheral boundary (14) of the SIM card (1) corresponds to a form factor smaller than 4FF.

## Patentansprüche

1. Verfahren zur Herstellung einer Teilnehmer-Identitätsmodul- bzw. SIM-Karte (1), wobei das Verfahren die folgenden Schritte umfasst:
- Bereitstellen eines Bandes aus dielektrischem Material (2) mit einer ersten (6) und einer zweiten (9) Hauptoberfläche und einer leitfähigen Schicht (5), laminiert auf die erste Hauptoberfläche (6), wobei leitfähige Kontakte (7) in der leitfähigen Schicht (5) gebildet sind, wobei die leitfähigen Kontakte (7) angeordnet sind, um zumindest ein Feld von Kontakten (7) entsprechend einer SIM-Karte (1) zu bilden, das durch eine periphere Grenze (14) begrenzt ist;
- Bereitstellen eines Chips (8) und elektrisches Verbinden des Chips (8) mit zumindest einigen Kontakten (7) des zumindest einen Feldes von Kontakten (7);
- Bereitstellen eines Kapselungsmaterials (12) auf der zweiten Hauptoberfläche (9), über dem Chip (8);
**dadurch gekennzeichnet, dass** das Verfahren die folgenden Schritte umfasst:
- Bilden von Begrenzungsstrukturen (4) im dielektrischen Material (2) in der Nachbarschaft von und innerhalb der peripheren Grenze (14), wobei die Begrenzungsstrukturen (4) Öffnungen oder Prägungen umfassen, die entlang einer Begrenzungslinie (15) angeordnet sind; und
- Ausgeben des Kapselungsmaterials (12) über einem Bereich der zweiten Hauptoberfläche (9), der sich im Wesentlichen innerhalb der Begrenzungslinie (15) befindet, entlang der die Begrenzungsstrukturen angeordnet sind.

2. Verfahren nach Anspruch 1, wobei Bilden von Begrenzungsstrukturen (4) im dielektrischen Material (2) Stanzen von Löchern oder Schlitzen entlang der Begrenzungslinie (15) umfasst.

3. Verfahren nach einem der vorhergehenden Ansprüche, wobei eine flache Oberfläche (16) an der Oberseite des Kapselungsmaterials (12) gebildet wird.

4. Verfahren nach Anspruch 3, wobei die flache Oberfläche (16) durch Abreiben des Kapselungsmaterials (12) gebildet wird.

5. Verfahren nach Anspruch 3 oder 4, wobei eine Markierung (17) auf der flachen Oberfläche (16) eingraviert ist.

6. Verfahren nach einem der vorhergehenden Ansprüche, wobei Ausgeben des Kapselungsmaterials (12) durch thermische Kapselung durchgeführt wird.

7. Verfahren nach Anspruch 6, wobei das Kapselungsmaterial (12) ein Harz ist, das eine Viskosität zwischen 10.000 und 50.000 mPa·s aufweist.

8. Verfahren nach einem der vorhergehenden Ansprüche, wobei das Kapselungsmaterial (12) ausgegeben wird, um sich über die Begrenzungsstruktur (4) in der fertigen SIM-Karte zu erstrecken.

9. Verfahren nach einem der vorhergehenden Ansprüche, wobei die Begrenzungsstrukturen (4) sowohl im Band aus dielektrischem Material (2) als auch in der leitfähigen Schicht (5) als Durchgangslöcher gefertigt sind.

10. SIM-Karte (1), begrenzt durch eine periphere Grenze (14) und Folgendes umfassend:
- ein Substrat aus dielektrischem Material (2) mit einer ersten (6) und einer zweiten (9) Hauptoberfläche,
- eine leitfähige Schicht (5), laminiert auf die erste Hauptoberfläche (6), wobei leitfähige Kontakte (7) in der leitfähigen Schicht (5) gebildet sind, wobei die leitfähigen Kontakte (7) angeordnet sind, um ein Feld von Kontakten (7) zu bilden,
- einen Chip (8), elektrisch verbunden mit zumindest einigen Kontakten (7) des Feldes von Kontakten (7);
- ein Kapselungsmaterial (12) auf der zweiten Hauptoberfläche (9), über dem Chip (8); **dadurch gekennzeichnet, dass** sie Begrenzungsstrukturen (4) im dielektrischen Material in der Nachbarschaft und innerhalb der peripheren Grenze (14) umfasst, wobei die Begrenzungsstrukturen (4) entlang einer Begrenzungslinie (15) angeordnet sind und Öffnungen oder Prägungen umfassen, und wobei das Kapselungsmaterial (12) über einem Bereich der zweiten Hauptoberfläche (9) platziert ist, der sich im Wesentlichen innerhalb der Begrenzungslinie (15) befindet, entlang der die Begrenzungsstrukturen (4) angeordnet sind.

11. SIM-Karte nach Anspruch 10, die eine periphere Grenze (14) aufweist, die im Wesentlichen der externen Grenze des Feldes von Kontakten (7) entspricht.

12. SIM-Karte nach Anspruch 10 oder 11, wobei die periphere Grenze (14) der SIM-Karte (1) einem Formfaktor kleiner als 4FF entspricht.

## Revendications

1. Procédé de fabrication d'une carte (1) de module d'identité d'abonné (SIM), le procédé comprenant les étapes suivantes :
- fourniture d'une bande de matériau diélectrique (2) ayant des première (6) et deuxième (9) surfaces principales et une couche conductrice (5) laminée sur la première surface principale (6), avec des contacts conducteurs (7) formés dans la couche conductrice (5), les contacts conducteurs (7) étant disposés de manière à former au moins une plage de contacts (7) correspondant à une carte SIM (1) délimitée par une limite périphérique (14) ;
- fourniture d'une puce (8) et connexion électrique de la puce (8) à au moins certains contacts (7) de l'au moins une plage de contacts (7) ;
- fourniture d'un matériau d'encapsulation (12) sur la deuxième surface principale (9), par-dessus la puce (8) ;
**caractérisé en ce que** le procédé comprend les étapes suivantes :
- formation de structures de délimitation (4) dans le matériau diélectrique (2) à proximité et à l'intérieur de la limite périphérique (14), les structures de délimitation (4) comprenant des ouvertures ou des gaufrages disposés le long d'une ligne de bordure (15) ; et
- application du matériau d'encapsulation (12) au-dessus d'une zone de la deuxième surface principale (9) située essentiellement à l'intérieur de la ligne de bordure (15) le long de laquelle sont disposées les structures de délimitation.

2. Procédé selon la revendication 1, dans lequel la formation de structures de délimitation (4) dans le matériau diélectrique (2) comprend le poinçonnage de trous ou de fentes le long de la ligne de bordure (15).

3. Procédé selon l'une quelconque des revendications précédentes, dans lequel une surface plate (16) est formée au-dessus du matériau d'encapsulation (12).

4. Procédé selon la revendication 3, dans lequel la surface plate (16) est formée par abrasion du matériau d'encapsulation (12).

5. Procédé selon la revendication 3 ou 4, dans lequel une marque (17) est gravée sur la surface plate (16).

6. Procédé selon l'une quelconque des revendications précédentes, dans lequel l'application du matériau d'encapsulation (12) est effectuée par encapsulation thermique.

7. Procédé selon la revendication 6, dans lequel le matériau d'encapsulation (12) est une résine ayant une viscosité comprise entre 10 000 et 50 000 mPa.s.

8. Procédé selon l'une quelconque des revendications précédentes, dans lequel le matériau d'encapsulation (12) est appliqué de manière à s'étendre par-dessus la structure de délimitation (4) dans la carte SIM finie.

9. Procédé selon l'une quelconque des revendications précédentes, dans lequel les structures de délimitation (4) sont fabriquées comme des trous traversants à la fois dans la bande de matériau diélectrique (2) et la couche conductrice (5).

10. Carte SIM (1) délimitée par une limite périphérique (14) et comprenant :
- un substrat de matériau diélectrique (2) ayant des première (6) et deuxième (9) surfaces principales,
- une couche conductrice (5) laminée sur la première surface principale (6), avec des contacts conducteurs (7) formés dans la couche conductrice (5), les contacts conducteurs (7) étant disposés de manière à former une plage de contacts (7),
- une puce (8) connectée électriquement à au moins certains contacts (7) de la plage de contacts (7),
- un matériau d'encapsulation (12) sur la deuxième surface principale (9), par-dessus la puce (8) ;
**caractérisée en ce qu'**elle comprend des structures de délimitation (4) dans le matériau diélectrique à proximité et à l'intérieur de la limite périphérique (14), les structures de délimitation (4) étant disposées le long d'une ligne de bordure (15) et comprenant des ouvertures ou des gaufrages, et le matériau d'encapsulation (12) étant placé au-dessus d'une zone de la deuxième surface principale (9) située essentiellement à l'intérieur de la ligne de bordure (15) le long de laquelle sont disposées les structures de délimitation (4).

11. Carte SIM selon la revendication 10, ayant une limite périphérique (14) correspondant essentiellement à la limite externe de la plage de contacts (7).

12. Carte SIM selon la revendication 10 ou 11, la limite périphérique (14) de la carte SIM (1) correspondant à un facteur de forme inférieur à 4FF.
